# EUROPEAN PATENT SPECIFICATION

(11) **EP 3 499 661 B1**
(45) Date of publication and mention of the grant of the patent: **08.04.2020**
(21) Application number: 18204415.6
(22) Date of filing: 05.11.2018
(51) Int. Cl.: H02G 1/08, H02G 1/10, F16G 11/06

(54) **PULLING ASSEMBLY AND METHOD FOR PULLING A SUBMARINE CABLE**
ZIEHANORDNUNG UND VERFAHREN ZUM ZIEHEN EINES UNTERWASSERKABELS
PROCÉDÉ ET ENSEMBLE DE TIRAGE PERMETTANT DE TIRER UN CÂBLE SOUS-MARIN

(30) Priority: 12.12.2017 NL 2020068
(43) Date of publication of application: 19.06.2019
(73) Proprietor: B.V. Twentsche Kabelfabriek, 7481 KJ Haaksbergen (NL)
(72) Inventor: ROELOFS, Rob, 7481 KJ HAAKSBERGEN (NL); WESSELS, Werner Alexander, 7481 KJ HAAKSBERGEN (NL)
(74) Representative: Melchior, Robin

(56) References cited:
- EP-A1- 1 953 882
- GB-A- 2 142 788
- GB-A- 2 169 993
- US-B1- 9 027 908

## Description

### BACKGROUND

The invention relates to a pulling assembly and a method for pulling a submarine cable an example of which is shown in GB 2 169 993 A.

DE 42 00 865 A1 discloses a cable drawing device with a cable sock - also known as a 'Chinese finger grip' - which is tightened around the outer sheath of the cable by pulling in the longitudinal direction of the cable. The end of the cable is stripped to expose a traction cord with a number of traction-resistant strands. The cable sock is attached to a pulling eye via a sleeve. The traction-resistant strands are received into a central bore of the sleeve and a conical wedge is propelled into said central bore from the opposite side to fix the traction-resistant strands between said wedge and the sleeve. The known cable drawing device has the advantage that the pulling load at the pulling eye is not exerted on the sheathing which is not traction-resistant. Instead, the pulling load can be taken up entirely by the traction-resistant strands between the central wedge and the sleeve.

### SUMMARY OF THE INVENTION

The known cable drawing device is arranged for taking the pulling load in the longitudinal direction of the cable, i.e. for pulling the cable in a straight line. On many occasions however, the cable has to be pulled through or around a bend, e.g. when coiling the cable in a factory, when pulling the cable through cable guides in the factory, when pulling the cable from the factory into a transport vessel, when laying the cable from transport vessel onto the seabed and/or when pulling the cable from the seabed into the tower of an offshore windmill. The known cable drawing device is not adapted for taking the transverse pulling loads that occur during the pulling of the able around a bend and will be pulled sideways with respect to the cable or may even be torn of. Meanwhile the stiffness in the cable causes said cable to continue on its own path, possibly colliding with and/or getting stuck behind obstacles.

It is an object of the present invention to provide a pulling assembly and method for pulling a submarine cable around a bend.

According to a first aspect, the invention provides a pulling assembly for pulling a submarine cable, wherein the submarine cable has a longitudinal direction, wherein the pulling assembly comprises a pulling member facing in a terminal direction for connection to an external pulling means and a coupling member for coupling of the pulling assembly to the submarine cable, wherein the coupling member is provided with an open first end for receiving a stripped end of the submarine cable in a receiving direction in line with the longitudinal direction of said submarine cable, wherein the pulling assembly further comprises a guiding member that extends from a second end of the coupling member opposite to the first end of the coupling member to the pulling member, wherein the guiding member is flexible between a straight state in which the guiding member extends over a guiding length along a straight line between the pulling member and the second end of the coupling member and a bend state in which the guiding member extends along a bend line between the pulling member and the second end of the coupling member, wherein the guide member in the bend state has a minimum bending angle between the terminal direction and the receiving direction of at least twenty degrees per meter of the guiding length.

The guiding member is located in front of the stripped end of the submarine cable and will arrive at the bend first. When a pulling force is applied to the pulling member in a pulling direction transverse to the longitudinal direction of the submarine cable, the guiding member can move from the straight state towards the bend state to at least partially flex in the direction of the pulling force. In the bend state, the guiding member can function as a guide for guiding the trailing submarine cable around the bend.

Preferably, the minimum bending angle is at least thirty degrees per meter of the guiding length, and preferably is at least forty-five degrees per meter of the guiding length. A higher minimum bending angle means that the guiding member can be bent to a smaller radius and thus can guide the submarine cable along tighter bends. Similarly, the bend line can have a minimum radius in the range of one to three meters, and preferably in the range of one-and-a-half to two-and-a-half meters.

Alternatively, the guiding member in the bend state has a maximum bending angle of less than seventy degrees per meter of the guiding length, and preferably less than sixty degrees per meter of the guiding length. By restricting the bending angle to a maximum bending angle, it can be prevented that the guiding member is bend to a bend state that exceeds the flexibility and/or tensile strength of the submarine cable. Moreover, when said maximum bending angle has been reached, the guiding member may function as a lever for exerting a bending moment on the submarine cable. Said bending moment may cause the submarine cable to bend, which can make the pulling of the submarine cable around bends easier.

In another embodiment the guiding member within the flexible range between the straight state and the bend state is capable of exerting a bending moment on the coupling member at the open first end thereof of at least three kNm, and preferably of at least four kNm. The guiding member can thus act as a lever for exerting the bending moment of the submarine cable. Said bending moment may cause the submarine cable to bend, which can make the pulling of the submarine cable around bends easier. It has been found that a bending moment of at least three kNm is enough to bend a typical submarine cable with a Young's modulus of approximately six kNm² around a bend with a radius of approximately two meters. The guiding member may be capable of exerting said bending moment as a result of its bending stiffness, its flexural rigidity or when the maximum bending angle has been reached.

In another embodiment the pulling assembly further comprises a tensioning member for tensioning the guiding member in a tensioning direction. By tensioning the guiding member, the bending stiffness, flexural rigidity and/or maximum bending angle of said guiding member can be set.

In a preferred embodiment thereof the tensioning direction extends parallel, radially or circumferentially with respect to the straight line when the guiding member is in the straight state. The tensioning direction can influence the behaviour of the guiding member, in particular the way in which it is capable of transmitting the pulling force from the pulling member onto the coupling member. When the tensioning direction is parallel to the straight line, the pulling forces can be transmitted through the heart of the guiding member. When the tensioning direction is radially or circumferentially, the pulling forces can be effectively transmitted along the circumference or around the outer surface of the guiding member.

In the previously described embodiment, the tensioning member is described as being part of the pulling assembly. However, the tensioning member may alternatively be supplied separately from the pulling assembly, in which case the pulling assembly is merely provided with a first tensioning mount at or near the pulling member and a second tensioning mount at or near the coupling member, wherein the guiding member is provided with an hollow cavity extending along the straight line in the straight state of the guiding member from the first tensioning mount to the second tensioning mount for mounting a tensioning member between the first tensioning mount and the second tensioning mount. Hence, the tensioning member can be accommodated fully within the guiding member.

In an embodiment thereof the position of one of the first tensioning mount and the second tensioning mount is adjustable along the straight line with respect to the other of the first tensioning mount and the second tensioning mount for adjusting the tension in the tensioning member. By adjusting the tension, the bending stiffness, flexural rigidity and/or maximum bending angle of the guiding member can be adjusted to match the requirements of the pulling assembly.

In a further embodiment thereof the tensioning member, the first tensioning mount and the second tensioning mount have a load limit of at least four kN, and preferably of at least five kN. It has been found that a pulling force of at least four kN can effective pull the submarine cable around a bend. Hence, the tensioning member and its mounts should at least be able to withstand such loads.

Preferably, the aforementioned tensioning member is a chain. A chain is sufficiently strong to withstand the loads as a result of the pulling, while it is also capable of following the bending of the guiding member between the straight state and the bend state.

In another embodiment the guiding member comprises a plurality of rigid segments which are interconnected to form articulating vertebrae extending along the straight line in the straight state of the guiding member. The rigid segments can be designed to be sufficiently strong to withstand the considerable forces involved with pulling a submarine cable, while the articulation allows for the guiding member to flex.

In an embodiment thereof the plurality of rigid segments are arranged to abut each other in the bend state to restrict the articulation of the vertebrae to a maximum bending angle between the terminal direction and the receiving direction of less than seventy degrees, and preferably less than sixty degrees. Again, by restricting the bending angle to a maximum bending angle, it can be prevented that the guiding member is bend to a bend state that exceeds the flexibility and/or tensile strength of the submarine cable. Moreover, when said maximum bending angle has been reached, the guiding member may function as a lever for exerting a bending moment on the submarine cable. Said bending moment may cause the submarine cable to bend, which can make the pulling of the submarine cable around bends easier.

In a further embodiment thereof the guiding member further comprises a flexible segment between each pair of adjacent rigid segments for limiting the articulation of between said pair of adjacent rigid segments. The flexible segment can provide the resilient compression between the rigid segments that allows the guiding member to flex back to the straight state when the pulling force is no longer applied to the pulling member.

Preferably, said pair of adjacent rigid segments is concentrically connected to each other, wherein the flexible segment is ring-shaped to extend around the concentric connection between said pair of adjacent rigid segments. Hence, the flexible segment can be fitted between the rigid segments without interfering with the connection between said rigid segments.

In a further preferred embodiment thereof the flexible segments consist of or comprise a resilient material, preferably a resilient elastomeric material.

In yet another embodiment the guiding member tapers from the coupling member towards the pulling member. Preferably, the guiding member tapers conically from the coupling member towards the pulling member. Hence, the guiding member can taper from the diameter of the coupling member towards the smaller diameter of the pulling member. A conical tapering means that the guiding member can be relatively smooth and is therefore less likely to get stuck behind obstacles.

In a further embodiment the submarine cable comprises one or more insulated, electrically conductive cores and a cylindrical or substantially cylindrical protective sheathing surrounding said one or more cores, wherein the coupling member comprises a cylindrical coupling sleeve for concentrically connecting to and circumferentially contacting said protective sheathing. Hence, a strong grip and/or connection can be obtained between the coupling sleeve and the protective sheathing.

In a preferred embodiment thereof the submarine cable further comprises armouring between the protective sheathing and the one or more cores, wherein the armouring comprises a plurality of armour wires and wherein at least some of the armour wires are exposed with respect to the protective sheathing at the stripped end of the submarine cable, wherein the coupling member comprises a wire fixation tool for receiving and fixating at least some of the exposed armour wires in the receiving direction with respect to the wire fixation tool, wherein the wire fixation tool is operationally connected to the coupling sleeve for positioning the coupling sleeve with respect to the fixated armour wires. Hence, the positioning of the coupling sleeve with respect to the fixated armour wires can be fixated to obtain a strong coupling that is able to transmit the pulling force onto the armour wires of the submarine cable.

Preferably, the coupling member further comprises a tightening element for tightening the coupling sleeve in a tightening direction opposite to the receiving direction towards and/or over the protective sheathing of the submarine cable. By tightening the coupling sleeve, a forceful and/or pressing abutment can be obtained, that can have some sealing effect.

More preferably, the coupling member comprises a threaded rod extending from the wire fixation tool in the receiving direction towards the second end of the coupling member, wherein the coupling member is provided with an end cap that is slidable over the threaded rod in the tightening direction, wherein the tightening element is a nut engaging with the threaded rod in the tightening direction from an opposite side of the end cap with respect to the wire fixation tool for tightening the end cap with respect to the wire fixation tool. The nut can be easily tightened with the use of readily available tools.

In an embodiment thereof the end cap is integrally formed with or fixated relative to the coupling sleeve. Alternatively, the end cap and the coupling sleeve are separate and wherein the end cap is arranged to abut the coupling sleeve in the tightening direction.

According to a second aspect, the invention provides a method for pulling a submarine cable with the use of the pulling assembly according to any one of the aforementioned embodiments, wherein the method comprises the steps of:
- stripping an end of the submarine cable to obtain the stripped end;
- receiving the stripped end of the submarine cable in the receiving direction in line with the longitudinal direction of said submarine cable in the open first end of the coupling member;
- connecting the pulling member to an external pulling means in the terminal direction;
- exerting a pulling force on the pulling member with the use of the external pulling means to pull the submarine cable; and
- flexing the guiding member from the straight state into the bend state to pull the submarine cable around a bend.

The method relates to the practical implementation of the pulling member according to the first aspect of the invention. Hence, the method and its embodiments have the same technical effects, which will not be repeated hereafter.

In a preferred embodiment the method further comprises the step of flexing the guiding member in the flexible range between the straight state and the bend state and thereby exerting a bending moment on the coupling member at the open first end thereof of at least three kNm, and preferably of at least four kNm.

In a further embodiment of the method the submarine cable comprises one or more insulated, electrically conductive cores and a cylindrical or substantially cylindrical protective sheathing surrounding said one or more cores, wherein the coupling member comprises a cylindrical coupling sleeve, wherein the method further comprises the step of concentrically connecting the coupling sleeve to and in contact with said protective sheathing.

Preferably, the armouring comprises a plurality of armour wires and wherein at least some of the armour wires are exposed with respect to the protective sheathing at the stripped end of the submarine cable, wherein the coupling member comprises a wire fixation tool, wherein the method further comprises the steps of receiving and fixating at least some of the exposed wires in the receiving direction in the wire fixation tool and operationally connecting the wire fixation tool to the coupling sleeve for positioning the coupling sleeve with respect to the fixated armour wires.

In a further embodiment the method further comprises the step of tightening the coupling sleeve in a tightening direction opposite to the receiving direction towards and/or over the protective sheathing of the submarine cable.

In a further embodiment the method further comprises the step of providing one or more first watertight seals between the coupling member and the stripped end of the submarine cable to seal said stripped end from water. Hence, water ingress into the cores of the submarine cable can be prevented.

Additionally or alternatively, the method further comprises the step of providing one or more second watertight seals between the coupling member and guiding member to seal the coupling member from water. Hence, water ingress into the cores of the submarine cable can be prevented.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached schematic drawings, in which:
figure 1 shows a side view of a pulling assembly for pulling a submarine cable according to a first embodiment of the invention;
figure 2 shows a cross section of the pulling assembly according to line II-II in figure 1;
figure 3 shows a cross section of the pulling assembly according figure 2 in a bend state;
figure 4 shows a side view of an end of the submarine cable after said end has been stripped to expose a plurality of armour wires;
figures 5, 6 and 7 show in cross section the steps of a method for mounting the pulling system to the stripped end of the submarine cable of figure 4;
figure 8 shows a cross section of the submarine cable according to line VIII-VIII in figure 5;
figure 9 shows a cross section of the submarine cable with the pulling assembly according to line IX-IX in figure 5;
figure 10 shows a cross section of the submarine cable with the pulling assembly according to figure 9 with additional sealing elements;
figure 11 shows a side view of an alternative pulling assembly for pulling a cable submarine according to a second embodiment of the invention; and
figures 12, 13 and 14 show in cross section the steps of a method for mounting the pulling system to the stripped end of the submarine cable of figure 11.

### DETAILED DESCRIPTION OF THE INVENTION

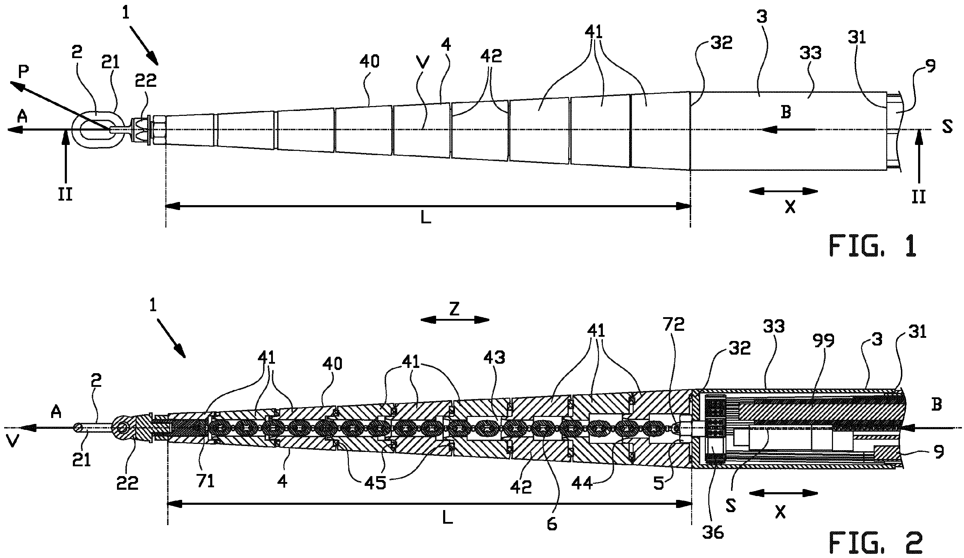

Figure 1 shows a pulling assembly 1 for pulling a submarine cable 9 through and/or around a bend according to a first exemplary embodiment of the invention.

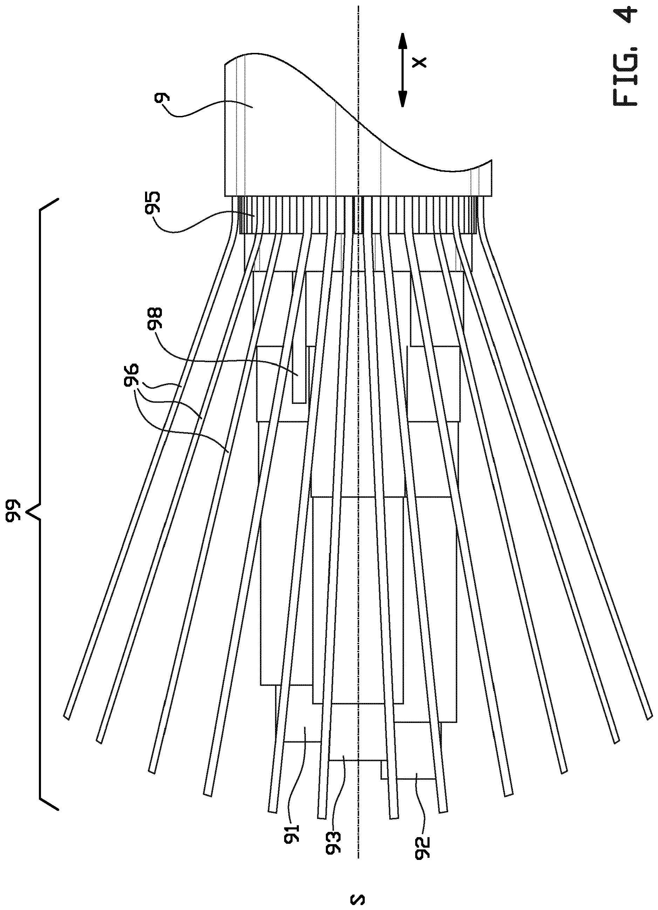

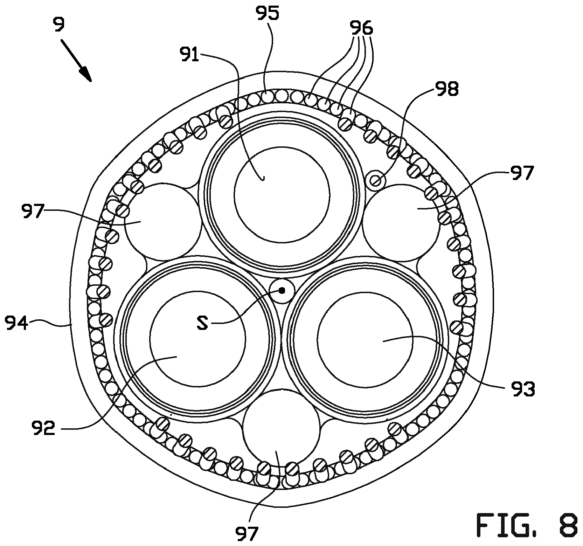

As shown in cross section in figure 8, the submarine cable 9 in this example comprises three insulated, electrically conductive cores 91, 92, 93 and a cylindrical or substantially cylindrical protective sheathing 94, surrounding said cores 91-93. Preferably the protective sheathing 94 consists of or comprises Polyethylene (PE). The submarine cable 9 further comprises armouring 95 between the protective sheathing 94 and the cores 91, 92, 93. The armouring 95 comprises a plurality of armour wires 96. Optionally, the submarine cable 9 may comprise fillers 97 and an optical fibre core 98. Said submarine cable 9 may for instance be used in long-distance applications, e.g. in offshore wind farms. It will be apparent to one skilled in the art that the pulling assembly 1 according to the present invention may be used in combination with different cable configurations, e.g. a single core submarine cable. As shown in figure 1, the submarine cable 9 has a central axis or centre line S extending in or defining a longitudinal direction X of the submarine cable 9. As shown in figure 4, an end of the submarine cable 9 has been stripped to obtain a stripped end 99. At least some of the armour wires 96 extend or project from the protective sheathing 94, thereby exposing said armour wires 96. In this exemplary embodiment, a number of armour wires 96 have been cut-off at the end of the protective sheathing 94 so that a limited number of armour wires 96, e.g. less than half of all the armour wires 96, remain exposed.

As shown in figure 1, the pulling assembly 1 comprises a pulling member 2 facing in a terminal direction A for connection to an external pulling means (not shown). The pulling assembly 1 further comprises a coupling member 3 for coupling of the pulling assembly 1 to the stripped end 99 of the submarine cable 9 in a manner that will be described in more detail hereafter. Between the pulling member 2 and the coupling member 3, the pulling assembly 1 is provided with a guiding member 4 for guiding the submarine cable 9 through or along a bend.

As best seen in figure 1, the pulling member 2 comprises a pulling eye 21 for connecting to the external pulling means in the terminal direction A and a swivel base 22 for connecting said pulley eye 21 to the guiding member 4. The pulling eye 21 can be swivelled with respect to the swivel base 22 in the pulling direction P of the external pulling means. The pulling direction P may thus deviate from the terminal direction A in order to exert a transverse pulling force on the pulling assembly 1 to pull the submarine cable 9 through and/or along a bend.

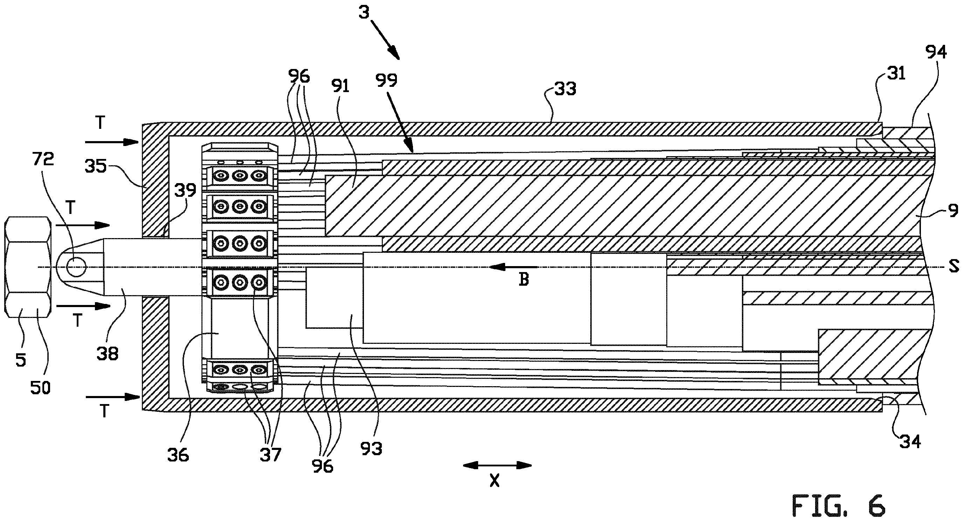

The coupling member 3 is provided with an open first end 31 for receiving the stripped end 99 of the submarine cable 9 in a receiving direction B in line with or parallel to the longitudinal direction X of said submarine cable 9. In particular, as best seen in the cross section of figure 6, the coupling member 3 comprises a cylindrical coupling sleeve 33 with a circumferential edge 34 that defines said open first end 31. The coupling sleeve 33 is arranged to be slid over the stripped end 99 of the submarine cable 9, concentrically with respect to the centre line S thereof, until the circumferential edge 34 contacts the protective sheathing 94. Preferably, the coupling sleeve 33 consists of or comprises a rigid material, e.g. stainless steel. In this exemplary embodiment, the coupling sleeve 33 extends over at least 0,3 meters in the receiving direction B.

As further shown in figure 6, the coupling member 3 comprises a second end 32, opposite to the first end 31, for connection to the guiding member 4. The coupling member 3 is provided with an end cap 35 at the second end 32 for closing off the coupling sleeve 34 at the side of the guiding member 4. In this exemplary embodiment, the end cap 35 is integral with the coupling sleeve 33. Alternatively, the end cap 35 may be a separate part that is fastened to and/or fixated with respect to the coupling sleeve 33, e.g. through welding. The coupling member 3 further comprises a wire fixation tool 36 for receiving and fixating at least some of the exposed armour wires 96 in the receiving direction B with respect to said wire fixation tool 36. In this exemplary embodiment, the wire fixation tool 36 comprises three groups of each five clamps 38. Each clamp 38 is arranged for simultaneously clamping two of the exposed armour wires 96. Alternatively, different clamping configurations may be used to obtain a similar effect. The armour wires 96 are substantially traction-resistant. Hence, by fixating the exposed armour wires 96 in the wire fixation tool 36, the position of the wire fixation tool 36 relative to the submarine cable 9 in the longitudinal direction X thereof is substantially fixed.

The coupling sleeve 33 is arranged for concentrically receiving the stripped end 99 of the submarine cable 9 with the wire fixation tool 36 fixated thereon in the receiving direction B. Preferably, the wire fixation tool 36 is disc or ring shaped to concentrically fit inside the cylindrical spaced defined by the coupling sleeve 33. The wire fixation tool 36 is operationally connected to the coupling sleeve 33 for positioning the coupling sleeve 33 with respect to the fixated armour wires 96. In particular, as shown in figure 6, the coupling member 3 further comprises a tightening element 5 for tightening the coupling sleeve 33 in a tightening direction T opposite to the receiving direction towards and/or over the protective sheathing 94 of the submarine cable 9. In this exemplary embodiment, the coupling member 3 comprises a threaded rod 38 and the tightening element 5 is a nut 50 for engaging said threaded rod 38. The threaded rod 38 extends from the wire fixation tool in the receiving direction B towards the second end 32 of the coupling member 3. The end cap 35 is provided with an opening 39 that is aligned with the threaded rod 38 for sliding the end cap 35 over the threaded rod 38 in the tightening direction T. The nut 50 is arranged to engage with the threaded rod 38 in the tightening direction T from an opposite side of the end cap 35 with respect to the wire fixation tool 36 for tightening the end cap 35 with respect to the wire fixation tool 36.

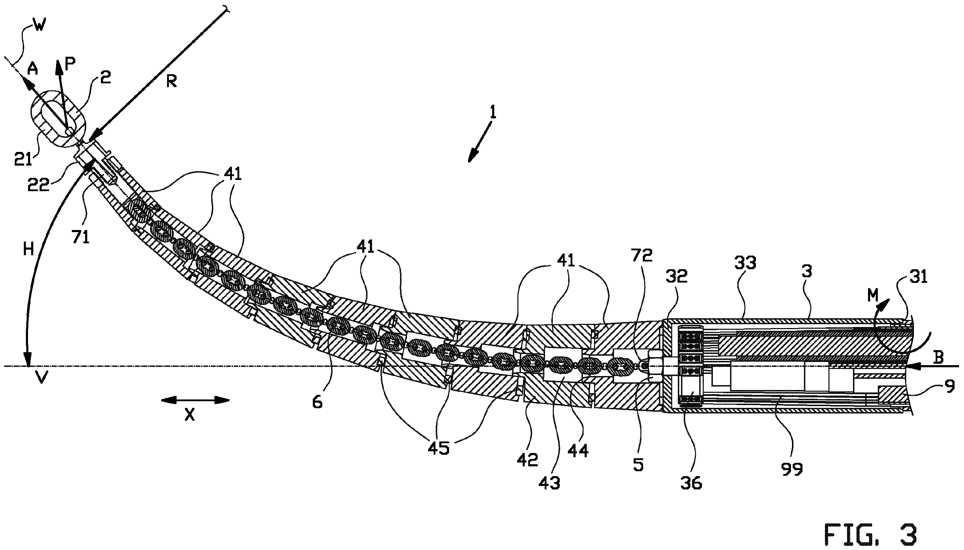

As shown in figures 2 and 3, the guiding member 4 extends between the swivel base 22 of the pulling member 2 and the second side 32 of the coupling member 3. The guiding member 3 is flexible between a straight state, as shown in figure 2, in which the guiding member 4 extends over a guiding length L along a straight line V between the pulling member 2 and the second end 32 of the coupling member 3 and a bend state, as shown in figure 3, in which the guiding member 4 extends along a bend line W between the pulling member 2 and the second end 32 of the coupling member 3. The guiding length L is to be understood as the length of the guiding member 4 in the straight state of figure 2 between the second end 32 of the coupling member 3 and the swivel base 22 of the pulling member 2. In this exemplary embodiment, the guiding length is approximately one meter. Different guiding lengths L are possible depending on the guiding requirements, e.g. the gaps between consecutive obstacles that define the bend. In the bend state of figure 3, the guiding member 4 has a minimum bending angle H between the terminal direction A and the receiving direction B of at least twenty degrees per meter of the guiding length. Preferably, the minimum bending angle H is at least thirty degrees per meter of the guiding length L and most preferably at least forty-five degrees per meter of the guiding length L. At a bending angle H of at least twenty degrees, bend line W has a minimum radius R of less than three meters. Correspondingly, at a bending angle H of at least thirty degrees, the minimum radius R will be less than two meters and, at a bending angle H of at least forty-five degrees, the minimum radius R will be less than one-and-a-half meters.

The guiding member 4 according to the invention is flexible between the straight state of figure 2 and the bend state of figure 3, meaning that the guiding member 4 is resiliently and/or elastically movable in a flexing range between said two states. When no pulling force is exerted on the pulling member 2 in the pulling direction P, the guiding member 4 will resiliently and/or elastically return to the unstressed, straight state of figure 2. The flexing range, i.e. the range within which the guiding member 4 is flexibly, elastically and/or resiliently movable without plastic deformation, is restricted to a maximum bending angle H of less than seventy degrees per meter of the guiding length L, and preferably of less than sixty degrees per meter of the guiding length L.

Preferably, the guiding member 4 has a bending stiffness or flexural rigidity, i.e. a resistance to bending, so that during the flexing a considerable bending moment M, as schematically shown in figure 3, may be exerted onto the coupling member 3 at the open first end 31 thereof. In particular, the guiding member 4 is designed such that, within the flexible range between the straight state and the bend state, it is capable of exerting a bending moment M on the coupling member 2 at the open first end 31 thereof of at least three kNm, and preferably of at least four kNm. Said bending moment M should be sufficient to at least partially bend the submarine cable 9 directly upstream of said coupling member 2.

As shown in figure 2, the guiding member 4 comprises a plurality of rigid segments 41 which are interconnected to form articulating vertebrae 40 extending along the straight line V in the straight state of the guiding member 4. In this exemplary embodiment, the guiding member 4 comprises a series of 9 interconnected rigid segments 41. Each rigid segment 41 comprises an annular body 42 and a through hole 43 extending concentrically through said annular body 42. Each rigid segment 41 further comprises a concentrically extending, annular protrusion 44 that concentrically fits in an articulating manner in the through hole 43 of an adjacent one of the rigid segments 41 to connect the pair of adjacent rigid segments 41. Preferably, the plurality of rigid segments 41 are arranged to abut each other in the bend state, as shown in figure 3, to restrict the articulation of the vertebrae 40 to the aforementioned maximum bending angle H.

Additionally or alternatively, the guiding member 4 comprises a flexible segment 45 between each pair of adjacent rigid segments 41 for limiting the articulation of said pair of adjacent rigid segments 41. Preferably, the flexible segment 45 is ring-shaped to extend around the concentric protrusion 44 between said pair of adjacent rigid segments 41. In this exemplary embodiment, the flexible segments 45 consist of or comprise a resilient and/or compressible material, preferably a resilient and/or compressible elastomeric material like Polyurethane (PU). The compressibility of the flexible segments 45 defines the extent of the flexibility of the articulating vertebrae 40.

As shown in figure 2, the guiding member 4 tapers from the coupling member 3 towards the pulling member 2. Preferably, the guiding member 4 tapers conically from the coupling member 3 towards the pulling member 2. In particular, the guiding member 4 tapers from the diameter of the coupling member 3 and/or the submarine cable 9 to the smaller diameter of the pulling member 2. Hence, the guiding member 4 can be relatively smooth and/or without abrupt transitions.

In the exemplary embodiment of figure 2, the pulling assembly 1 further comprises a tensioning member 6 for tensioning the guiding member 4 in the straight state in a tensioning direction Z parallel to the straight line V. More in particular, the pulling assembly 1 is provided with a first tensioning mount 71 at or near the pulling member 2 and a second tensioning mount 72 at or near the coupling member 3. The through holes 43 in the rigid segments 41 of the guiding member 4 form a hollow cavity extending along the straight line V in the straight state of the guiding member 4 from the first tensioning mount 71 to the second tensioning mount 72. Hence, the tensioning member 6 can be mounted between the first tensioning mount 71 and the second tensioning mount 72 and extend through the hollow cavity at the heart of the guiding member 4. Preferably, the position of the first tensioning mount 71 is adjustable along the straight line V with respect to the second tensioning mount 72 for adjusting the tension in the tensioning member 6. In this example, the first tensioning mount 71 is coupled to the pulling member 2, which is provided with a thread and which is arranged to engage with a threaded inside of the last rigid segment 41. Hence, by rotating the pulling member 2 with respect to the last rigid segment 41, the position of the pulling member 2 and the first tensioning mount 71 connected thereto can be adjusted.

Preferably, the tensioning member 6, the first tensioning mount 71 and the second tensioning mount 72 have a load limit of at least four kN, and preferably of at least five kN. In this exemplary embodiment, the tensioning member 6 is a chain.

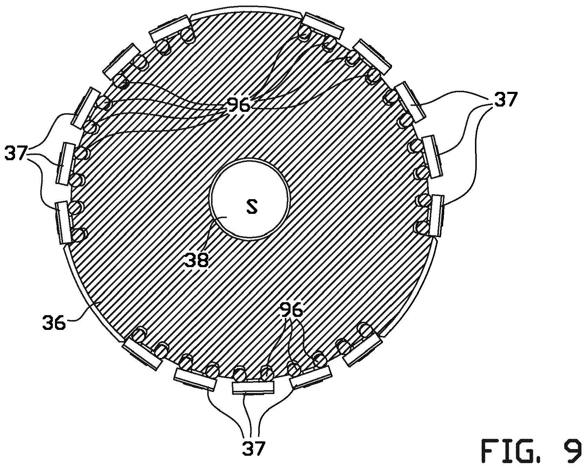

A method for pulling the submarine cable 9 through and/or along a bend with the use of the aforementioned pulling assembly 1 will now briefly be described with reference to figures 1-10.

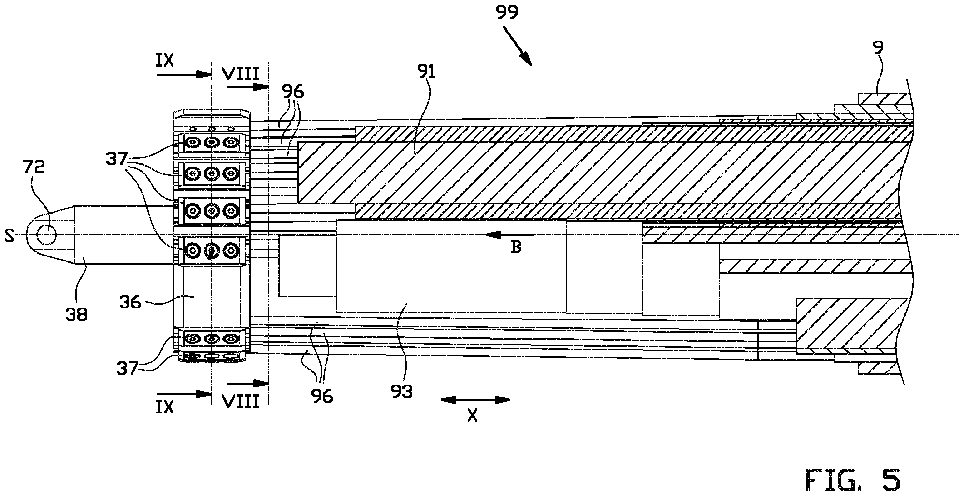

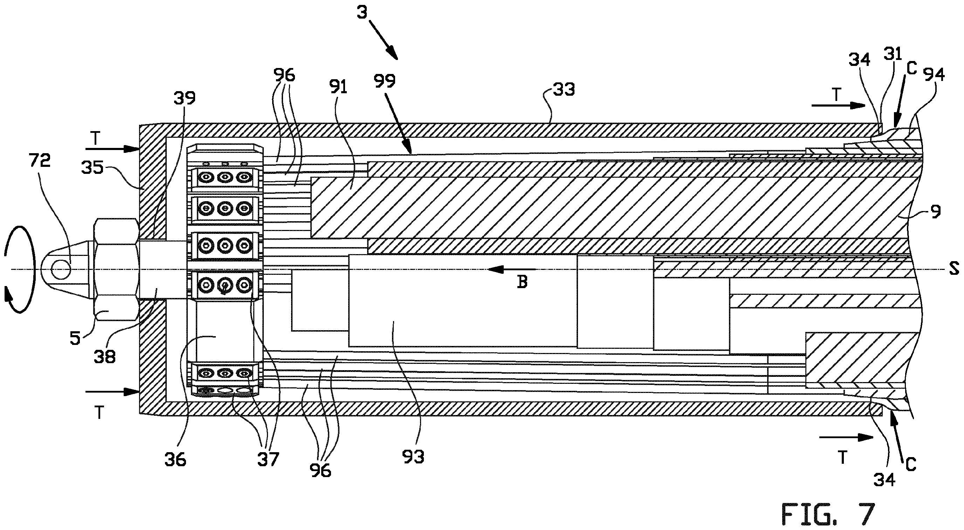

In the situation of figure 4, an end of the submarine cable 9 has been stripped to obtain the stripped end 99 in the manner as described before. Figures 5, 6 and 7 show the consecutive steps of coupling the coupling member 3 to said stripped end 99. In particular, figure 5 shows the situation in which the exposed armour wires 96 are received and fixed in the wire fixation tool 36 in the manner as described before. Subsequently, as shown in figure 6, the coupling sleeve 33 is slid over the stripped end 99 of the submarine cable 9 and the wire fixation tool 36 attached thereto. The opening 39 in the end cap 35 is aligned with and slid over the threaded rod 38. Subsequently, as shown in figure 7, the tightening element 5 in the form of the nut 50 is mounted on the opposite side of the threaded rod 38 with respect to the wire fixation tool 36. The nut 50 is then tightened in the tightening direction T to force the coupling sleeve 33 into contact with and/or over the protective sheathing 94. In particular, the protective sheathing 94 is compressed slightly inwards upon contact with the circumferential edge 94 to allow for the coupling sleeve 33 to move over the protective sheathing 94 (schematically shown in figure 7 with arrow C). Hence, a reliable watertight sealing between the coupling sleeve 33 and the submarine cable 9 can be obtained.

With the coupling member 3 now coupled to the stripped end 99 of the submarine cable 9, the guiding member 4 can be assembled in front of said coupling member 3. In particular, the first rigid segment 41 of figure 2 is placed downstream of the end cap 35 of the coupling member 3. The first rigid segment 41 may be placed in direct contact with the end cap 35 or with interposition of an intermediate flexible segment 42 between the end cap 35 and the coupling member 3. Subsequently, the rest of the rigid segments 41 and their interposed flexible segments 42 is assembled right up to the position where the pulling member 2 is to be attached. Prior, during or after assembly of the guiding member 4, the tensioning member 6 is assembled and/or inserted and connected to the second tensioning mount 72. Once the guiding member 4 has been fully assembled and the tensioning member 6 is located inside said assembled guiding member 4, the first tensioning mount 71 is connected to the tensioning member 6 and pulling member 2 is mounted to the end of the guiding member 4. The tensioning member 6 may now be tensioned in the aforementioned manner to adjust the bending stiffness of the guiding member 4.

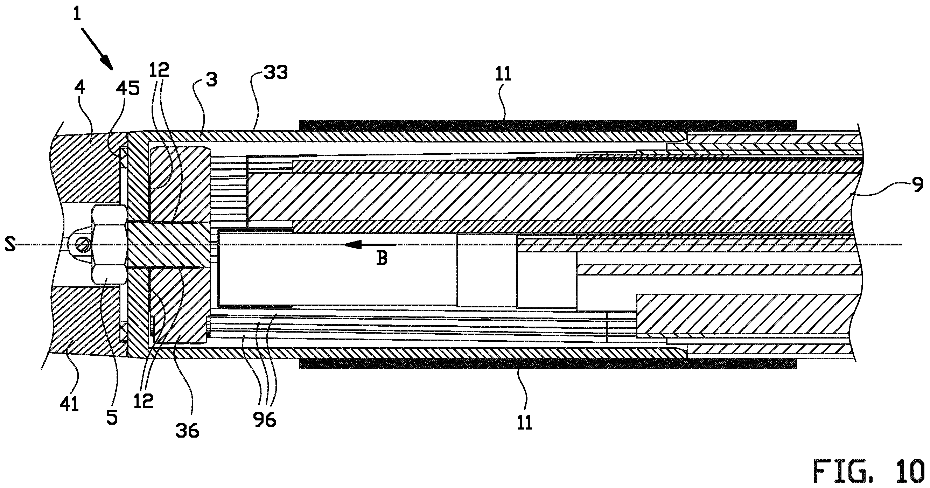

Optionally, as shown in figure 10, the method further comprises the steps to further seal the pulling assembly 1 and/or the submarine cable 9 from water. In particular, one or more first watertight seals 11 may be provided between the coupling member 3 and the stripped end 99 of the submarine cable 9 to seal said stripped end 99 from water ingress. In this exemplary embodiment, the transition from the coupling member 33 to the protective sheathing 94 at the circumferential edge 34 is sealed by heat shrinking a shrink tube or shrink foil around said transition. Alternatively or additionally, one or more second watertight seals 12 may be provided between the coupling member 3 and guiding member 4 to seal the coupling member 3 from water ingress. In this exemplary embodiment, the one or more second watertight seals 12 are obtained by gluing the threaded rod 38 to the wire fixation tool 36 and/or by providing a compressible sealing layer between the end cap 35 and the wire fixation tool 36.

The pulling assembly 1 is now ready for pulling the submarine cable 9 around and/or through a bend. External pulling means (not shown) are used to exert a pulling force onto the pulling member 2 in a pulling direction P, as shown in figure 3, to pull the pulling assembly 1 from the straight state, as shown in figure 2, into the bend state, as shown in figure 3. During tests with a guiding member 4 with a guiding length L of approximately one meter and a coupling member 3 with a length of approximately 0,4 meters, it has been found that at a bending angle H of approximately fifty-five degrees, a pulling force of approximately six kN was required to exert a bending moment M via the guiding member 4 onto the coupling member 3 at the open first end 31 thereof of at least three kN. Said bending moment M was found to be sufficient to pull the submarine cable 9 around a bend with a radius R of approximately two meters.

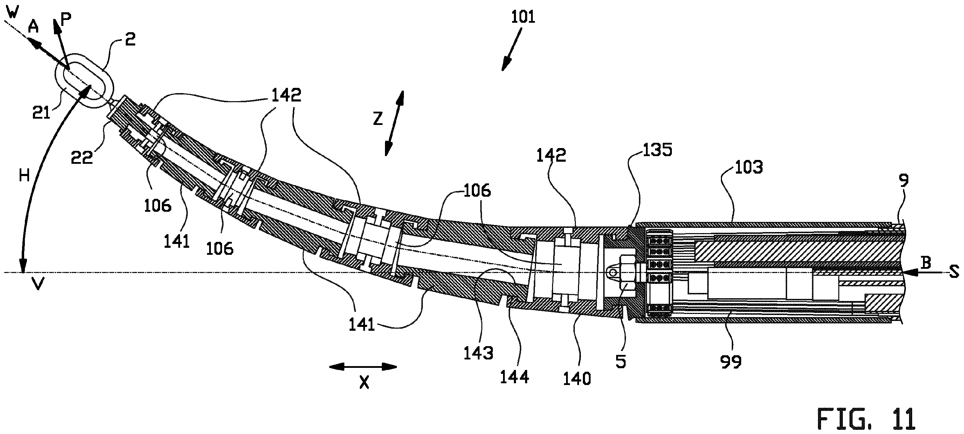

Figure 11 shows an alternative pulling assembly 101 according to a second embodiment of the invention. Like the aforementioned pulling assembly 1, the alternative pulling assembly 101 is again provided with a guiding member 104 comprising a plurality of rigid segments 141 and a plurality of flexible segments 142. However, in this case, the flexible segments 142 have approximately the same length as the rigid segments 141. The rigid segments 141 and the flexible segments 142 are interconnected to form articulating vertebrae 140 with similar bending characteristics as in the pulling assembly 1 according to the first aspect of the invention. In this exemplary embodiment, the rigid segments 141 and the flexible segments 142 are interconnected in an articulating manner with the use of mutually engaging hooks 143, 144. The alternative pulling assembly 101 features a plurality of tensioning members 106 that - in contrast to the aforementioned single tensioning member 6 - do not extend in the longitudinal direction X through the hollow cavity in the guiding member 104. Instead, said tensioning members 106 are arranged for tensioning the flexible segments 142 in a tensioning direction Z radially and/or circumferentially with respect to the straight line V, e.g. by compressing each flexible segment 142 in said tensioning direction Z with the use of a tensioning bolt. More tension means less tolerance or free space between the mutually engaging hooks 143, 144 and thus less articulation between the rigid segments 141 and the flexible segments 142.

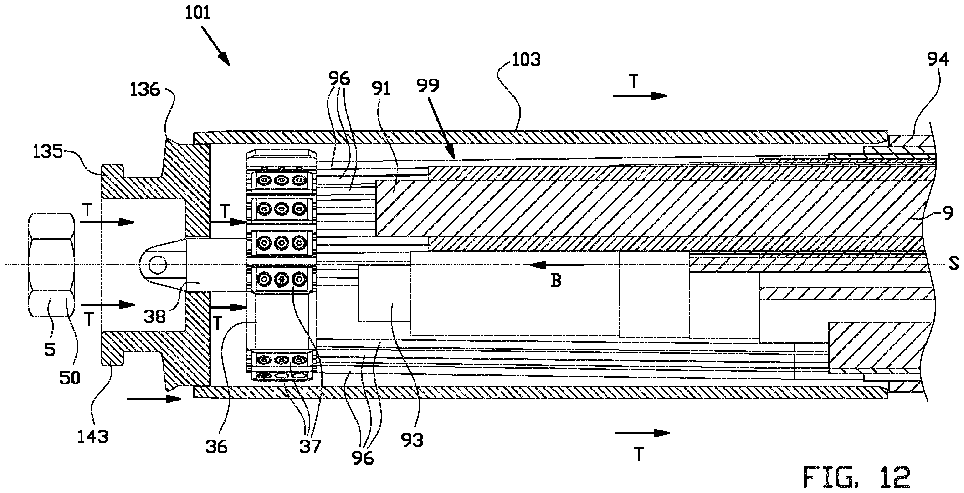

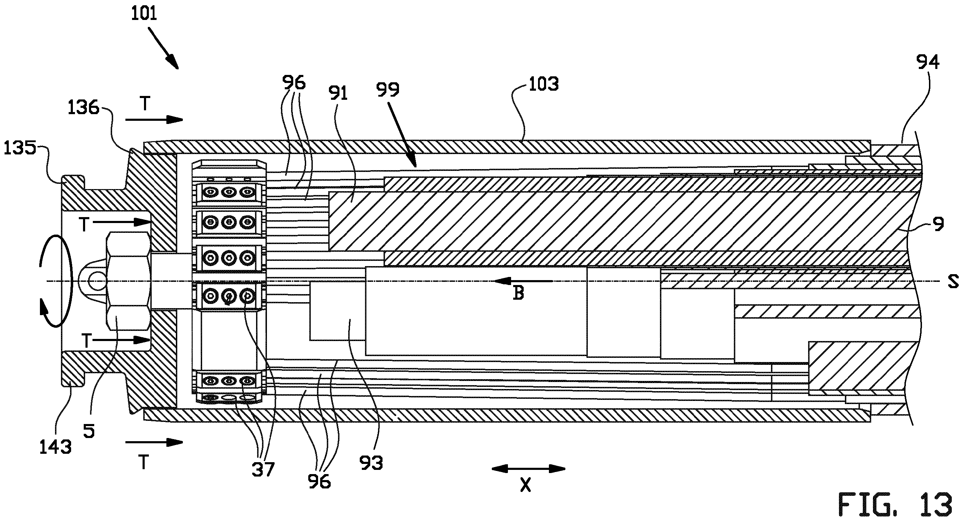

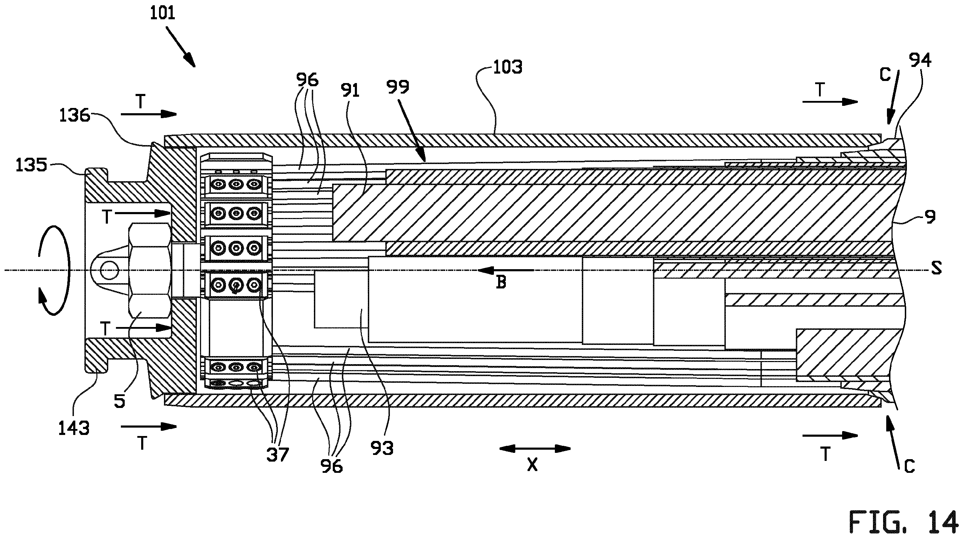

As shown in figures 12, 13 and 14, the alternative pulling assembly 101 further differs from the aforementioned pulling assembly 1 in that it features a coupling sleeve 103 and an end cap 135 which are separate, i.e. not integral. The end cap 135 is provided with a flange 136 that is arranged to abut the coupling sleeve 103 in the tightening direction T. When the tightening element 5 is mounted on the threaded rod 38 (figure 13), the end cap 135 is forced over said threaded rod 38 towards the wire fixation tool 36 and on its way pushes the coupling sleeve 103 towards and over the protective sheathing 94 of the submarine cable 9 (figure 14).

It is to be understood that the above description is included to illustrate the operation of the preferred embodiments and is not meant to limit the scope of the invention. From the above discussion, many variations will be apparent to one skilled in the art that would yet be encompassed by the scope of the present invention.

In summary, the invention relates to a pulling assembly 1, 101 and a method for pulling a submarine cable 9, wherein the pulling assembly 1, 101 comprises a pulling member 2 facing in a terminal direction A for connection to an external pulling means and a coupling member 3, 103 for coupling of the pulling assembly 1, 101 to the submarine cable 9, wherein the coupling member 3, 103 is provided with an open first end 31 for receiving a stripped end 99 of the submarine cable 9 in a receiving direction B in line with the longitudinal direction X of said submarine cable 9, wherein the pulling assembly 1, 101 further comprises a guiding member 4, 104 that is flexible between a straight state in which the guiding member 4, 104 extends over a guiding length L along a straight line V between the pulling member 2 and the second end 32 of the coupling member 3, 103 and a bend state in which the guiding member 4, 104 extends along a bend line W between the pulling member 2 and the second end 32 of the coupling member 3, 103.

## Claims

1. Pulling assembly (1) for pulling a submarine cable (9), wherein the submarine cable has a longitudinal direction (X), wherein the pulling assembly (1) comprises a pulling member (2) facing in a terminal direction (A) for connection to an external pulling means and a coupling member (3) for coupling of the pulling assembly (1) to the submarine cable (9), wherein the coupling member (3) is provided with an open first end (31) for receiving a stripped end (99) of the submarine cable (9) in a receiving direction (B) in line with the longitudinal direction (X) of said submarine cable (9), **characterized in that** the pulling assembly (1) further comprises a guiding member (4) that extends from a second end (32) of the coupling member (3) opposite to the first end (31) of the coupling member (3) to the pulling member (2), wherein the guiding member (4) is flexible between a straight state in which the guiding member (4) extends over a guiding length (L) along a straight line (V) between the pulling member (2) and the second end (32) of the coupling member (3) and a bend state in which the guiding member (4) extends along a bend line (W) between the pulling member (2) and the second end (32) of the coupling member (3), wherein the guide member (4) in the bend state has a minimum bending angle (H) between the terminal direction (A) and the receiving direction (B) of at least twenty degrees per meter of the guiding length, preferably at least thirty degrees per meter of the guiding length, and most preferably is at least forty-five degrees per meter of the guiding length.

2. Pulling assembly according to claim 1, wherein the bend line has a minimum radius in the range of one to three meters, and preferably in the range of one-and-a-half to two-and-a-half meters.

3. Pulling assembly according to claim 1, wherein the guiding member in the bend state has a maximum bending angle of less than seventy degrees per meter of the guiding length, and preferably less than sixty degrees per meter of the guiding length.

4. Pulling assembly according to any one of the preceding claims, wherein the guiding member within the flexible range between the straight state and the bend state is capable of exerting a bending moment on the coupling member at the open first end thereof of at least three kNm, and preferably of at least four kNm.

5. Pulling assembly according to any one of the preceding claims, wherein the pulling assembly further comprises a tensioning member, in particular a chain, for tensioning the guiding member in a tensioning direction, preferably wherein the tensioning direction extends parallel, radially or circumferentially with respect to the straight line when the guiding member is in the straight state.

6. Pulling assembly according to any one of claims 1-4, wherein the pulling assembly is provided with a first tensioning mount at or near the pulling member and a second tensioning mount at or near the coupling member, wherein the guiding member is provided with an hollow cavity extending along the straight line in the straight state of the guiding member from the first tensioning mount to the second tensioning mount for mounting a tensioning member between the first tensioning mount and the second tensioning mount, preferably wherein the position of one of the first tensioning mount and the second tensioning mount is adjustable along the straight line with respect to the other of the first tensioning mount and the second tensioning mount for adjusting the tension in the tensioning member.

7. Pulling assembly according to claim 6, wherein the tensioning member, the first tensioning mount and the second tensioning mount have a load limit of at least four kN, and preferably of at least five kN.

8. Pulling assembly according to any one of the preceding claims, wherein the guiding member comprises a plurality of rigid segments which are interconnected to form articulating vertebrae extending along the straight line in the straight state of the guiding member, preferably wherein the plurality of rigid segments are arranged to abut each other in the bend state to restrict the articulation of the vertebrae to a maximum bending angle between the terminal direction and the receiving direction of less than seventy degrees or less than sixty degrees.

9. Pulling assembly according to claim 8, wherein the guiding member further comprises a flexible segment between each pair of adjacent rigid segments for limiting the articulation of said pair of adjacent rigid segments, preferably wherein said pair of adjacent rigid segments is concentrically connected to each other, wherein the flexible segment is ring-shaped to extend around the concentric connection between said pair of adjacent rigid segments.

10. Pulling assembly according to claim 9, wherein the flexible segments consist of or comprise a resilient material, preferably a resilient elastomeric material.

11. Pulling assembly according to any one of the preceding claims, wherein the guiding member tapers from the coupling member towards the pulling member, preferably wherein the guiding member tapers conically from the coupling member towards the pulling member.

12. Pulling assembly according to any one of the preceding claims, wherein the submarine cable comprises one or more insulated, electrically conductive cores and a cylindrical or substantially cylindrical protective sheathing surrounding said one or more cores, wherein the coupling member comprises a cylindrical coupling sleeve for concentrically connecting to and circumferentially contacting said protective sheathing,
preferably wherein the submarine cable further comprises armouring between the protective sheathing and the one or more cores, wherein the armouring comprises a plurality of armour wires and wherein at least some of the armour wires are exposed with respect to the protective sheathing at the stripped end of the submarine cable, wherein the coupling member comprises a wire fixation tool for receiving and fixating at least some of the exposed armour wires in the receiving direction with respect to the wire fixation tool, wherein the wire fixation tool is operationally connected to the coupling sleeve for positioning the coupling sleeve with respect to the fixated armour wires,
more preferably wherein the coupling member further comprises a tightening element for tightening the coupling sleeve in a tightening direction opposite to the receiving direction towards and/or over the protective sheathing of the submarine cable,
more preferably wherein the coupling member comprises a threaded rod extending from the wire fixation tool in the receiving direction towards the second end of the coupling member, wherein the coupling member is provided with an end cap that is slidable over the threaded rod in the tightening direction, wherein the tightening element is a nut engaging with the threaded rod in the tightening direction from an opposite side of the end cap with respect to the wire fixation tool for tightening the end cap with respect to the wire fixation tool,
most preferably wherein the end cap is integrally formed with or fixated relative to the coupling sleeve, or wherein the end cap and the coupling sleeve are separate and wherein the end cap is arranged to abut the coupling sleeve in the tightening direction.

13. Method for pulling a submarine cable (9) with the use of the pulling assembly (1) according to any one of the preceding claims, wherein the method comprises the steps of:
- stripping an end of the submarine cable (9) to obtain the stripped end (99);
- receiving the stripped end (99) of the submarine cable (9) in the receiving direction (B) in line with the longitudinal direction (X) of said submarine cable (9) in the open first end (31) of the coupling member (3);
- connecting the pulling member (2) to an external pulling means in the terminal direction (A);
- exerting a pulling force on the pulling member (2) with the use of the external pulling means to pull the submarine cable (9); and
- flexing the guiding member (4) from the straight state into the bend state to pull the submarine cable (9) around a bend.

14. Method according to claim 13, wherein the method further comprises the step of flexing the guiding member in the flexible range between the straight state and the bend state and thereby exerting a bending moment on the coupling member at the open first end thereof of at least three kNm, and preferably of at least four kNm.

15. Method according to claim 13 or 14, wherein the submarine cable comprises one or more insulated, electrically conductive cores and a cylindrical or substantially cylindrical protective sheathing surrounding said one or more cores, wherein the coupling member comprises a cylindrical coupling sleeve, wherein the method further comprises the step of concentrically connecting the coupling sleeve to and in contact with said protective sheathing., preferably wherein the armouring comprises a plurality of armour wires and wherein at least some of the armour wires are exposed with respect to the protective sheathing at the stripped end of the submarine cable, wherein the coupling member comprises a wire fixation tool, wherein the method further comprises the steps of receiving and fixating at least some of the exposed wires in the receiving direction in the wire fixation tool and operationally connecting the wire fixation tool to the coupling sleeve for positioning the coupling sleeve with respect to the fixated armour wires, more preferably wherein the method further comprises the step of tightening the coupling sleeve in a tightening direction opposite to the receiving direction towards and/or over the protective sheathing of the submarine cable.

16. Method according to any one of claims 13-15, wherein the method further comprises the step of providing one or more first watertight seals between the coupling member and the stripped end of the submarine cable to seal said stripped end from water ingress, or wherein the method further comprises the step of providing one or more second watertight seals between the coupling member and guiding member to seal the coupling member from water ingress.

## Patentansprüche

1. Ziehbaugruppe (1) zum Ziehen eines Unterseekabels (9), wobei das Unterseekabel eine Längsrichtung (X) aufweist, wobei die Ziehbaugruppe (1) ein Ziehbauglied (2), das zum Verbinden mit einer externen Zieheinrichtung in eine Anschlussrichtung (A) gewandt ist, und ein Koppelbauglied (3) zum Koppeln der Ziehbaugruppe (1) mit dem Unterseekabel (9) aufweist, wobei das Koppelbauglied (3) mit einem offenen ersten Ende (31) zum Aufnehmen eines abgezogenen Endes (99) des Unterseekabels (9) in einer Aufnahmerichtung (B) in Übereinstimmung mit der Längsrichtung (X) des Unterseekabels (9) vorgesehen ist, **dadurch gekennzeichnet, dass** die Ziehbaugruppe (1) ferner ein Führungsbauglied (4) aufweist, das sich von einem zweiten Ende (32) des Koppelbauglieds (3) gegenüber dem ersten Ende (31) des Koppelbauglieds (3) zu dem Ziehbauglied (2) hin erstreckt, wobei das Führungsbauglied (4) zwischen einem geraden Zustand, in dem das Führungsbauglied (4) sich über eine Führungslänge (L) entlang einer geraden Linie (V) zwischen dem Ziehbauglied (2) und dem zweiten Ende (32) des Koppelbauglieds (3) erstreckt, und einem gebogenen Zustand, in dem das Führungsbauglied (4) sich entlang einer Biegelinie (W) zwischen dem Ziehbauglied (2) und dem zweiten Ende (32) des Koppelbauglieds (3) erstreckt, flexibel ist, wobei das Führungsbauglied (4) in dem gebogenen Zustand einen minimalen Biegewinkel (H) zwischen der Anschlussrichtung (A) und der Aufnahmerichtung (B) von zumindest 20 Grad pro Meter der Führungslänge, bevorzugt zumindest 30 Grad pro Meter der Führungslänge und noch bevorzugter von zumindest 45 Grad pro Meter der Führungslänge aufweist.

2. Ziehbaugruppe gemäß Anspruch 1, wobei die Biegelinie einen Mindestradius im Bereich von ein bis drei Metern und bevorzugt im Bereich von anderthalb bis zweieinhalb Metern aufweist.

3. Ziehbaugruppe gemäß Anspruch 1, wobei das Führungsbauglied in dem gebogenen Zustand einen maximalen Biegewinkel von weniger als 70 Grad pro Meter der Führungslänge und bevorzugt von weniger als 60 Grad pro Meter der Führungslänge aufweist.

4. Ziehbaugruppe gemäß einem der vorhergehenden Ansprüche, wobei das Führungsbauglied in dem flexiblen Bereich zwischen dem geraden Zustand und dem gebogenen Zustand in der Lage ist, auf das Koppelbauglied an dem offenen ersten Ende desselben ein Biegemoment von zumindest drei kNm und bevorzugt von zumindest vier kNm auszuüben.

5. Ziehbaugruppe gemäß einem der vorhergehenden Ansprüche, wobei die Ziehbaugruppe ferner ein Spannbauglied, insbesondere eine Kette, zum Spannen des Führungsbauglieds in einer Spannrichtung aufweist, wobei die Spannrichtung sich bevorzugt parallel, radial oder umfangsmäßig bezüglich der geraden Linie erstreckt, wenn das Führungsbauglied in dem geraden Zustand ist.

6. Ziehbaugruppe gemäß einem der Ansprüche 1 bis 4, wobei die Ziehbaugruppe mit einer ersten Spannhalterung an oder nahe dem Ziehbauglied und einer zweiten Spannhalterung an oder nahe dem Koppelbauglied versehen ist, wobei das Führungsbauglied mit einem Hohlraum versehen ist, der sich in dem geraden Zustand des Führungsbauglieds entlang der geraden Linie von der ersten Spannhalterung zu der zweiten Spannhalterung erstreckt, um ein Spannbauglied zwischen der ersten Spannhalterung und der zweiten Spannhalterung zu befestigen, wobei die Position einer der ersten Spannhalterung und der zweiten Spannhalterung bevorzugt entlang der geraden Linie bezüglich der anderen der ersten Spannhalterung und der zweiten Spannhalterung einstellbar ist, um die Spannung in dem Spannbauglied einzustellen.

7. Ziehbaugruppe gemäß Anspruch 6, wobei das Spannbauglied, die erste Spannhalterung und die zweite Spannhalterung eine Lastgrenze von zumindest vier kN und bevorzugt von zumindest fünf kN aufweisen.

8. Ziehbaugruppe gemäß einem der vorhergehenden Ansprüche, wobei das Führungsbauglied eine Mehrzahl von starren Segmenten aufweist, die zwischengeschaltet sind, um gelenkverbundene Wirbel zu bilden, die sich in dem geraden Zustand des Führungsbauglieds entlang der geraden Linie erstrecken, wobei die Mehrzahl von starren Segmenten bevorzugt dahin gehend angeordnet ist, in dem gebogenen Zustand aneinander anzustoßen, um die Gelenkverbindung der Wirbel auf einen maximalen Biegewinkel zwischen der Anschlussrichtung und der Aufnahmerichtung von weniger als 70 Grad oder weniger als 60 Grad zu beschränken.

9. Ziehbaugruppe gemäß Anspruch 8, wobei das Führungsbauglied ferner ein flexibles Segment zwischen jedem Paar von benachbarten starren Segmenten aufweist, um die Gelenkverbindung des Paares von benachbarten starren Segmenten zu begrenzen, wobei das Paar von benachbarten starren Segmenten bevorzugt konzentrisch miteinander verbunden ist, wobei das flexible Segment ringförmig ist, um sich um die konzentrische Verbindung zwischen dem Paar von benachbarten starren Segmenten zu erstrecken.

10. Ziehbaugruppe gemäß Anspruch 9, wobei die flexiblen Segmente aus einem elastischen Material, bevorzugt einem elastischen Elastomermaterial, bestehen oder dasselbe enthalten.

11. Ziehbaugruppe gemäß einem der vorhergehenden Ansprüche, wobei das Führungsbauglied sich von dem Koppelbauglied zu dem Ziehbauglied hin verjüngt, wobei das Führungsbauglied sich bevorzugt konisch von dem Koppelbauglied zu dem Ziehbauglied hin verjüngt.

12. Ziehbaugruppe gemäß einem der vorhergehenden Ansprüche, wobei das Unterseekabel einen oder mehrere isolierte, elektrisch leitfähige Kerne und einen zylindrischen oder im Wesentlichen zylindrischen Schutzmantel aufweist, der den einen oder die mehreren Kerne umgibt, wobei das Koppelbauglied eine zylindrische Koppelmuffe zum konzentrischen Verbinden mit und umfangsmäßigen Berühren des Schutzmantels aufweist,
wobei das Unterseekabel bevorzugt ferner eine Bewehrung zwischen dem Schutzmantel und dem einen oder den mehreren Kernen aufweist, wobei die Bewehrung eine Mehrzahl von Bewehrungsdrähten aufweist und wobei zumindest einige der Bewehrungsdrähte bezüglich des Schutzmantels an dem abgezogenen Ende des Unterseekabels freiliegend sind, wobei das Koppelbauglied ein Drahtfixierungswerkzeug zum Aufnehmen und Fixieren zumindest einiger der freiliegenden Bewehrungsdrähte in der Aufnahmerichtung bezüglich des Drahtfixierungswerkzeugs aufweist, wobei das Drahtfixierungswerkzeug betriebsmäßig mit der Koppelmuffe verbunden ist, um die Koppelmuffe bezüglich der fixierten Bewehrungsdrähte zu positionieren,
wobei bevorzugter das Koppelbauglied ferner ein Anziehelement aufweist, um die Koppelmuffe in einer Anziehrichtung, die entgegengesetzt zu der Aufnahmerichtung ist, zu dem Schutzmantel des Unterseekabels hin und/oder über denselben anzuziehen,
wobei bevorzugter das Koppelbauglied eine Gewindestange aufweist, die sich von dem Drahtfixierungswerkzeug in der Aufnahmerichtung zu dem zweiten Ende des Koppelbauglieds hin erstreckt, wobei das Koppelbauglied mit einer Abschlusskappe versehen ist, die in der Anziehrichtung über die Gewindestange verschiebbar ist, wobei das Anziehelement eine Schraubenmutter ist, die die Gewindestange in der Anziehrichtung von einer entgegengesetzten Seite der Abschlusskappe bezüglich des Drahtfixierungswerkzeugs in Eingriff nimmt, um die Abschlusskappe bezüglich des Drahtfixierungswerkzeugs anzuziehen,
wobei noch bevorzugter die Abschlusskappe einstückig mit der Koppelmuffe gebildet ist oder relativ zu derselben fixiert ist, oder wobei die Abschlusskappe und die Koppelmuffe getrennt sind und wobei die Abschlusskappe dahin gehend angeordnet ist, in der Anziehrichtung an die Koppelmuffe anzustoßen.

13. Verfahren zum Ziehen eines Unterseekabels (9) unter Verwendung der Ziehbaugruppe (1) gemäß einem der vorhergehenden Ansprüche, wobei das Verfahren die folgenden Schritte aufweist:
Abziehen eines Endes des Unterseekabels (9), um das abgezogenen Ende (99) zu erhalten;
Aufnehmen des abgezogenen Endes (99) des Unterseekabels (9) in der Aufnahmerichtung (B) in Übereinstimmung mit der Längsrichtung (X) des Unterseekabels (9) in dem offenen ersten Ende (31) des Koppelbauglieds (3);
Verbinden des Ziehbauglieds (2) mit einer externen Zieheinrichtung in der Anschlussrichtung (A);
Ausüben einer Ziehkraft auf das Ziehbauglied (2) unter Verwendung der externen Zieheinrichtung, um das Unterseekabel (9) zu ziehen; und
Biegen des Führungsbauglieds (4) aus dem geraden Zustand in den gebogenen Zustand, um das Unterseekabel (9) um eine Biegung zu ziehen.

14. Verfahren gemäß Anspruch 13, wobei das Verfahren ferner den Schritt des Biegens des Führungsbauglieds in dem flexiblen Bereich zwischen dem geraden Zustand und dem gebogenen Zustand und somit ein Ausüben eines Biegemoments auf das Koppelbauglied an dem offenen ersten Ende desselben von zumindest drei kNm und bevorzugt von zumindest vier kNm aufweist.

15. Verfahren gemäß Anspruch 13 oder 14, wobei das Unterseekabel einen oder mehrere isolierte, elektrisch leitfähige Kerne und einen zylindrischen oder im Wesentlichen zylindrischen Schutzmantel aufweist, der den einen oder die mehreren Kerne umgibt, wobei das Koppelbauglied eine zylindrische Koppelmuffe aufweist, wobei das Verfahren ferner den Schritt eines konzentrischen Verbindens der Koppelmuffe mit und in Kontakt mit dem Schutzmantel aufweist, wobei bevorzugt die Bewehrung eine Mehrzahl von Bewehrungsdrähten aufweist und wobei zumindest einige der Bewehrungsdrähte bezüglich des Schutzmantels an dem abgezogenen Ende des Unterseekabels freiliegend sind, wobei das Koppelbauglied ein Drahtfixierungswerkzeug aufweist, wobei das Verfahren ferner die Schritte des Aufnehmens und Fixierens zumindest einiger der freiliegenden Drähte in der Aufnahmerichtung in dem Drahtfixierungswerkzeug und eines betriebsmäßigen Verbindens des Drahtfixierungswerkzeugs mit der Koppelmuffe aufweist, um die Koppelmuffe bezüglich der fixierten Bewehrungsdrähte zu positionieren, wobei bevorzugter das Verfahren ferner den Schritt des Anziehens der Koppelmuffe in einer Anziehrichtung, die entgegengesetzt zu der Aufnahmerichtung ist, zu dem Schutzmantel des Unterseekabels hin und/oder über denselben aufweist.

16. Verfahren gemäß einem der Ansprüche 13 bis 15, wobei das Verfahren ferner den Schritt des Bereitstellens einer oder mehrerer erster wasserdichter Abdichtungen zwischen dem Koppelbauglied und dem abgezogenen Ende des Unterseekabels aufweist, um das abgezogene Ende gegen das Eindringen von Wasser abzudichten, oder wobei das Verfahren ferner den Schritt des Bereitstellens einer oder mehrerer zweiter wasserfester Abdichtungen zwischen dem Koppelbauglied und dem Führungsbauglied bereitstellt, um das Koppelbauglied gegen das Eindringen von Wasser abzudichten.

## Revendications

1. Ensemble de tirage (1) pour tirer un câble sous-marin (9), dans lequel le câble sous-marin a une direction longitudinale (X), dans lequel l'ensemble de tirage (1) comprend un organe de tirage (2) orienté dans une direction terminale (A) pour la connexion à des moyens de tirage externes, et un organe de couplage (3) pour le couplage de l'ensemble de tirage (1) au câble sous-marin (9), dans lequel l'organe de couplage (3) est pourvu d'une première extrémité (31) ouverte pour recevoir une extrémité dénudée (99) du câble sous-marin (9) dans une direction de réception (B) dans le sens de la direction longitudinale (X) dudit câble sous-marin (9), **caractérisé en ce que** l'ensemble de tirage (1) comprend en outre un organe de guidage (4) qui s'étend d'une deuxième extrémité (32) de l'organe de couplage (3) opposée à la première extrémité (31) de l'organe de couplage (3) à l'organe de tirage (2), dans lequel l'organe de guidage (4) est flexible entre un état droit dans lequel l'organe de guidage (4) s'étend sur une longueur de guidage (L) le long d'une ligne droite (V) entre l'organe de tirage (2) et la deuxième extrémité (32) de l'organe de couplage (3) et un état courbé dans lequel l'organe de guidage (4) s'étend le long d'une ligne courbée (W) entre l'organe de tirage (2) et la deuxième extrémité (32) de l'organe de couplage (3), dans lequel l'organe de guide (4) dans l'état courbé a un angle de courbure minimal (H) entre la direction terminale (A) et la direction de réception (B) d'au moins vingt degrés par mètre de la longueur de guidage, de préférence d'au moins trente degrés par mètre de la longueur de guidage, et de manière préférée entre toutes d'au moins quarante-cinq degrés par mètre de la longueur de guidage.

2. Ensemble de tirage selon la revendication 1, dans lequel la ligne courbée a un rayon minimal dans la plage d'un à trois mètres, et de préférence dans la plage d'un mètre et demi à deux mètres et demi.

3. Ensemble de tirage selon la revendication 1, dans lequel l'organe de guidage dans l'état courbé a un angle de courbure maximal de moins de soixante-dix degrés par mètre de la longueur de guidage, et de préférence moins de soixante degrés par mètre de la longueur de guidage.

4. Ensemble de tirage selon l'une quelconque des revendications précédentes, dans lequel l'organe de guidage dans la plage flexible entre l'état droit et l'état courbé est capable d'exercer un moment de courbure sur l'organe de couplage au niveau de sa première extrémité ouverte d'au moins trois kNm, et de préférence d'au moins quatre kNm.

5. Ensemble de tirage selon l'une quelconque des revendications précédentes, dans lequel l'ensemble de tirage comprend en outre un organe de tensionnage, notamment une chaîne, pour tensionner l'organe de guidage dans une direction de tensionnage, de préférence dans lequel la direction de tensionnage s'étend parallèlement, radialement ou de manière circonférentielle par rapport à la ligne droite lorsque l'organe de guidage est dans l'état droit.

6. Ensemble de tirage selon l'une quelconque des revendications 1 à 4, dans lequel l'ensemble de tirage est pourvu d'une première monture de tensionnage au niveau ou près de l'organe de tirage et d'une deuxième monture de tensionnage au niveau ou près de l'organe de couplage, dans lequel l'organe de guidage est pourvu d'une cavité creuse s'étendant le long de la ligne droite dans l'état droit de l'organe de guidage de la première monture de tensionnage à la deuxième monture de tensionnage pour monter un organe de tensionnage entre la première monture de tensionnage et la deuxième monture de tensionnage, de préférence dans lequel la position de l'une parmi la première monture de tensionnage et la deuxième monture de tensionnage est réglable le long de la ligne droite par rapport à l'autre parmi la première monture de tensionnage et la deuxième monture de tensionnage pour régler la tension de l'organe de tensionnage.

7. Ensemble de tirage selon la revendication 6, dans lequel l'organe de tensionnage, la première monture de tensionnage et la deuxième monture de tensionnage ont une limite de charge d'au moins quatre kN, et de préférence d'au moins cinq kN.

8. Ensemble de tirage selon l'une quelconque des revendications précédentes, dans lequel l'organe de guidage comprend une pluralité de segments rigides qui sont interconnectés pour former des vertèbres articulées s'étendant le long de la ligne droite dans l'état droit de l'organe de guidage, de préférence dans lequel la pluralité de segments rigides sont agencés pour venir en butée les uns contre les autres dans l'état courbé pour restreindre l'articulation des vertèbres à un angle de courbure maximal entre la direction terminale et la direction de réception de moins de soixante-dix degrés ou de moins de soixante degrés.

9. Ensemble de tirage selon la revendication 8, dans lequel l'organe de guidage comprend en outre un segment flexible entre chaque paire de segments rigides adjacents pour limiter l'articulation de ladite paire de segments rigides adjacents, de préférence dans lequel ladite paire de segments rigides adjacents sont connectés concentriquement l'un à l'autre, dans lequel le segment flexible est en forme d'anneau pour s'étendre autour de la connexion concentrique entre ladite paire de segments rigides adjacents.

10. Ensemble de tirage selon la revendication 9, dans lequel les segments flexibles sont constitués de ou comprennent un matériau résilient, de préférence un matériau élastomère résilient.

11. Ensemble de tirage selon l'une quelconque des revendications précédentes, dans lequel l'organe de guidage s'effile depuis l'organe de couplage vers l'organe de tirage, de préférence dans lequel l'organe de guidage s'effile de façon conique depuis l'organe de couplage vers l'organe de tirage.

12. Ensemble de tirage selon l'une quelconque des revendications précédentes, dans lequel le câble sous-marin comprend un ou plusieurs noyaux isolés, électriquement conducteurs et une gaine protectrice cylindrique ou sensiblement cylindrique entourant lesdits un ou plusieurs noyaux, dans lequel l'organe de couplage comprend un manchon de couplage cylindrique pour se connecter concentriquement à et entrer en contact de manière circonférentielle avec ladite gaine protectrice,
de préférence dans lequel le câble sous-marin comprend en outre un blindage entre la gaine protectrice et les un ou plusieurs noyaux, dans lequel le blindage comprend une pluralité de fils de blindage et dans lequel au moins certains des fils de blindage sont exposés par rapport à la gaine protectrice au niveau de l'extrémité dénudée du câble sous-marin, dans lequel l'organe de couplage comprend un outil de fixation de fil pour recevoir et fixer au moins certains des fils de blindage exposés dans la direction de réception par rapport à l'outil de fixation de fil, dans lequel l'outil de fixation de fil est connecté de manière fonctionnelle au manchon de couplage pour positionner le manchon de couplage par rapport aux fils de blindage fixés,
de manière davantage préférée dans lequel l'organe de couplage comprend en outre un élément de serrage pour serrer le manchon de couplage dans une direction de serrage opposée à la direction de réception vers et/ou par-dessus la gaine protectrice du câble sous-marin,
de manière davantage préférée dans lequel l'organe de couplage comprend une tige filetée s'étendant depuis l'outil de fixation de fil dans la direction de réception vers la deuxième extrémité de l'organe de couplage, dans lequel l'organe de couplage est pourvu d'un capuchon d'extrémité qui peut coulisser sur la tige filetée dans la direction de serrage, dans lequel l'élément de serrage est un écrou en prise avec la tige filetée dans la direction de serrage depuis un côté opposé du capuchon d'extrémité par rapport à l'outil de fixation de fil pour serrer le capuchon d'extrémité par rapport à l'outil de fixation de fil,
de manière préférée entre toutes dans lequel le capuchon d'extrémité est formé d'un seul tenant avec le manchon de couplage ou fixé relativement à celui-ci, ou dans lequel le capuchon d'extrémité et le manchon de couplage sont séparés et dans lequel le capuchon d'extrémité est agencé pour venir en butée contre le manchon de couplage dans la direction de serrage.

13. Procédé pour tirer un câble sous-marin (9) en utilisant l'ensemble de tirage (1) selon l'une quelconque des revendications précédentes, dans lequel le procédé comprend les étapes suivantes :
- mettre à nu une extrémité du câble sous-marin (9) pour obtenir l'extrémité dénudée (99) ;
- recevoir l'extrémité dénudée (99) du câble sous-marin (9) dans la direction de réception (B) dans le sens de la direction longitudinale (X) dudit câble sous-marin (9) dans la première extrémité (31) ouverte de l'organe de couplage (3) ;
- connecter l'organe de tirage (2) à des moyens de tirage externes dans la direction terminale (A) ;
- exercer une force de tirage sur l'organe de tirage (2) en utilisant les moyens de tirage externes pour tirer le câble sous-marin (9) ; et
- fléchir l'organe de guidage (4) de l'état droit à l'état courbé pour tirer le câble sous-marin (9) autour d'une courbure.

14. Procédé selon la revendication 13, dans lequel procédé comprend en outre l'étape de flexion de l'organe de guidage dans la plage flexible entre l'état droit et l'état courbé et exerçant ainsi un moment de courbure sur l'organe de couplage au niveau de sa première extrémité ouverte d'au moins trois kNm, et de préférence d'au moins quatre kNm.

15. Procédé selon la revendication 13 ou 14, dans lequel le câble sous-marin comprend un ou plusieurs noyaux isolés, électriquement conducteurs et une gaine protectrice cylindrique ou sensiblement cylindrique entourant lesdits un ou plusieurs noyaux, dans lequel l'organe de couplage comprend un manchon de couplage cylindrique, dans lequel le procédé comprend en outre l'étape de connexion concentrique du manchon de couplage à et en contact avec ladite gaine protectrice, de préférence dans lequel le blindage comprend une pluralité de fils de blindage et dans lequel au moins certains des fils de blindage sont exposés par rapport à la gaine protectrice au niveau de l'extrémité dénudée du câble sous-marin, dans lequel l'organe de couplage comprend un outil de fixation de fil, dans lequel le procédé comprend en outre les étapes de réception et de fixation d'au moins certains des fils exposés dans la direction de réception dans l'outil de fixation de fil, et de connexion de manière fonctionnelle de l'outil de fixation de fil au manchon de couplage pour positionner le manchon de couplage par rapport aux fils de blindage fixés, de manière davantage préférée dans lequel le procédé comprend en outre l'étape de serrage du manchon de couplage dans une direction de serrage opposée à la direction de réception vers et/ou par-dessus de la gaine protectrice du câble sous-marin.

16. Procédé selon l'une quelconque des revendications 13 à 15, dans lequel le procédé comprend en outre l'étape de fourniture d'un ou de plusieurs premiers joints étanches à l'eau entre l'organe de couplage et l'extrémité dénudée du câble sous-marin pour rendre ladite extrémité dénudée étanche aux infiltrations d'eau, ou dans lequel le procédé comprend en outre l'étape de fourniture d'un ou de plusieurs deuxièmes joints étanches à l'eau entre l'organe de couplage et l'organe de guidage pour rendre l'organe de couplage étanche aux infiltrations d'eau.
